# EUROPÄISCHE PATENTSCHRIFT

(11) **EP 1 773 919 B1**
(45) Veröffentlichungstag und Bekanntmachung des Hinweises auf die Patenterteilung: **12.11.2008**
(21) Anmeldenummer: 05768084.5
(22) Anmeldetag: 18.07.2005
(51) Int. Cl.: C08J 3/03, C08J 3/205, C09D 7/12, C09J 11/04

(54) **WÄSSRIGE BINDEMITTELDISPERSION MIT NANOPARTIKELN, VERFAHREN ZU DEREN HERSTELLUNG UND DEREN VERWENDUNG**
AQUEOUS BINDER DISPERSION COMPRISING NANOPARTICLES, METHOD FOR THE PRODUCTION THEREOF, AND USE THEREOF
DISPERSION AQUEUSE DE LIANT COMPORTANT DES NANOPARTICULES, ET SON PROCEDE DE PRODUCTION ET D'UTILISATION

(30) Priorität: 16.07.2004 DE 102004034368
(43) Veröffentlichungstag der Anmeldung: 18.04.2007
(73) Patentinhaber: Alberdingk Boley GmbH, 47829 Krefeld (DE)
(72) Erfinder: MÖBUS, Helmut, 67251 Freinsheim (DE); PTATSCHEK, Volker, 63773 Goldbach (DE); LEINZ, Gerhard, 47802 Krefeld (DE); HÖLDERLE, Matthias, 47798 Krefeld (DE)
(74) Vertreter: Pfenning, Meinig & Partner GbR
(86) Internationale Anmeldenummer: PCT/EP2005/007806
(87) Internationale Veröffentlichungsnummer: WO 2006/008120

(56) Entgegenhaltungen:
- WO-A-01/63360
- WO-A-03/095532
- DE-A1- 19 540 623
- DE-A1- 19 811 790
- US-A1- 2002 058 739

## Beschreibung

Die Erfindung betrifft eine wässrige Bindemitteldispersion aus einem polymeren und/oder oligomeren organischen Bindemittel und anorganischen Nanopartikeln, wobei in Wasser oder einer wässrigen kolloidalen Lösung nanoskalige Polymerpartikel dispergiert sind und diese nanoskaligen Polymerpartikel die anorganischen Nanopartikel umhüllen. Die Erfindung betrifft weiterhin ein Verfahren zur Herstellung einer derartigen wässrigen Bindemitteldispersion und dessen Verwendung.

Mit UV/VIS- oder Elektronenstrahlen härtbare Substanzen in Form der 100%igen Polymere und/oder Oligomere sowie weitere Polymere und Oligomere, wie z.B. Polyole für 2K Polyurethane oder organische Lösungsmittel enthaltende, physikalisch trocknende Lacke lassen sich mit Nanopartikeln füllen. In WO 03/44099 ist die Nanopartikelstabilisierung mittels adsorptiver Partikelorganophilierung beschrieben. Zur Herstellung nanopartikelhaltiger Beschichtungsmassen lassen sich auch die unter DE 198 46 660 beschriebenen polymerisierbaren Metalloxidnanopartikel verwenden. In DE 199 61 632 wird die in situ Organophilierung nanoskaliger Materialien in strahlenhärtenden Lacken durch bifunktionelle Silane beschrieben. Nanopartikel, die mittels Sol-Gel-Technik in situ im Polymer oder Oligomer erzeugt werden, sind aus DE 199 24 644 bekannt. Bevorzugt eingesetzt werden strahlenhärtende Formulierungen.

Die gefüllten 100%igen Substanzen zeichnen sich durch erhöhte Viskosität gegenüber den ursprünglichen Polymeren und/oder Oligomeren aus, was sich negativ auf die Fließeigenschaften beim Beschichtungsvorgang auswirkt. So lassen sich geringe Schichtdicken nicht realisieren und Auftragsverfahren wie das Spritzen oder Gießen sind nicht möglich.

Will man der herzustellenden Beschichtung noch elastische bzw. zähelastische Eigenschaften verleihen, muss man hochmolekulare und somit hochviskose Ausgangsstoffe einsetzen. Niedermolekulare Polymere und Oligomere mit entsprechend verringerter Viskosität bzw. Reaktivverdünner bewirken eine Versprödung der Schichten. Die beim Härtungsprozess verstärkt auftretenden inneren Spannungen wirken sich negativ auf die Haftung, die Elastizität und das Kratz- und Abriebverhalten aus. Zudem besteht die Gefahr der Rissbildung.

Wässrige strahlenhärtende, nanopartikelhaltige Beschichtungszusammensetzungen sind aus US 4,478,876 und US 5,260,350 bekannt. Sie bestehen aus wasserlöslichen Acrylaten, bifunktionellen Silanen mit hydrolisierbaren Alkoxy- und Acryloxygruppen sowie kolloidalen wässrigen Kieselsolen. Verwendet werden, aufgrund der Wasserlöslichkeit, ausschließlich niedermolekulare und hochalkoxylierte (Meth)acrylate, die Beschichtungen geringer mechanischer und chemischer Stabilität liefern.

Aus der DE 19548623 A1 ist ferner die Zweiphasensystem, das aus Nanopartikeln und einer Kontinuirlichen zweiten Phase besteht, bekannt.

DE 102 21 010 und DE 102 21 007 beschreiben nanopartikelhaltige wässrige Dispersionen. Die Polymerdispersion und Nanopartikeldispersion werden separat hergestellt und anschließend miteinander vermischt. Hier ist der Zusatz von 1-10% Amphiphilen, z.B. niedermolekularen Alkoholen wie Isopropanol notwendig. In ähnlicher Weise werden in DE 100 04 499 zur Herstellung nanopartikelhaltiger Beschichtungsstoffe, wässrige PU-Dispersionen mit kolloidal gelösten Nanopartikeln versetzt. Auch hier werden Alkohole verwendet, jedoch verbietet sich der Einsatz von organischen Lösungsmitteln oft aus Gründen der Wirtschaftlichkeit, das Ex-Schutzes und der Ökologie.

Die DE 198 11 790 A1 betrifft ferner Nanopartikel enthaltende transparente Lackbindemittel mit verbesserter Kratzbeständigkeit. Gemäß dem Offenbarungsgehalt dieses Dokumentes werden die Nanopartikelpulver mittels Dissolver zuerst in das Lösungsmittel eingearbeitet und anschließend werden die Nanopartikelslurries mittels des Düsenstrahldispergierverfahrens desagglomeriert.

Ausgehend hiervon war es Aufgabe der vorliegenden Erfindung, eine wässrige Bindemitteldispersion zu Beschichtungszwecken bereitzustellen, mit der ein hoher Grad an Nanopartikeln in der Dispersion erreicht werden kann und wobei die Dispersion in der Lackier- und Beschichtungstechnik sowie in Klebstoffanwendungen mit herkömmlichen Methoden wie Walzen, Spritzen, Streichen, Gießen oder Rollen applizierbar ist. Die Bindemitteldispersion soll ferner einfach herzustellen sein.

Diese Aufgabe wird durch die wässrige Bindemitteldispersion mit den Merkmalen des Anspruchs 1 und das Verfahren zu deren Herstellung mit den Merkmalen des Anspruchs 29 gelöst. In Anspruch 30 ist die Verwendung der wässrigen Dispersion angegeben. Die weiteren abhängigen Ansprüche zeigen vorteilhafte Weiterbildungen auf.

Erfindungsgemäß wird somit eine Bindemitteldispersion vorgeschlagen, bei der die Polymerpartikel die anorganischen Nanopartikel umhüllen. Diese Nanopartikel enthaltenden Polymerpartikel sind dann in Wasser oder einer wässrigen kolloidalen Lösung dispergiert. Der Kern der vorliegenden Erfindung ist somit darin zu sehen, dass eine Bindemitteldispersion oder -emulsion zur Verfügung gestellt wird, bei der die Nanopartikel in den Bindemittelpartikeln selbst enthalten sind.

Überraschenderweise konnte gezeigt werden, dass derart ausgewählte Bindemittel, in denen Nanopartikel hochdispers enthalten sind, hervorragend für die gängigen Lackier- und Beschichtungstechniken sowie Klebstoffanwendungen geeignet sind. Die Verarbeitung der erfindungsgemäßen Dispersionen oder Emulsionen aus den mit Nanopartikeln gefüllten Bindemittelpartikeln erhöhter Viskosität unter Verzicht auf Reaktivverdünner und organische Lösungsmittel, gleicht der Verarbeitung anderer wässriger Produkte, wie sie heute von wässrigen Alkydharzen und von wässrigen Dispersionen, z.B. von Styrol-, Acryl- und Polyurethan(co-)polymeren bekannt ist.

Mit Hilfe der erfindungsgemäßen wässrigen Polymerdispersion ist es nunmehr möglich, von deutlich höhermolekularen und höherviskosen Polymeren bzw. Oligomeren auszugehen und diese hochgradig mit Nanopartikeln zu füllen. Vergleichbare Beschichtungszusammensetzungen waren bislang gar nicht oder nur bei erhöhter Temperatur als Nanopartikel-verstärkte Beschichtung applizierbar. Dank der erfindungsgemäßen wässrigen Polymerdispersion werden nun niedrigviskose Beschichtungsmassen zur Verfügung gestellt, die bei Normaltemperatur und mit den üblichen Auftragstechniken appliziert werden können. Die erhaltenen Beschichtungen weisen jedoch die gleichen positiven Anwendungseigenschaften auf, wie die zu ihrer Herstellung verwendeten hochmolekularen, hochviskosen und mit Nanopartikeln verstärkten Polymere oder Oligomere.

Vorzugsweise enthält die wässrige Polymerdispersion ein Polymer und/oder Oligomer, das strahlenhärtend ist. Hierfür kommen UV/VIS-, α-, γ-Elektronenstrahlen oder andere energiereiche Strahlen in Frage.

Es ist aber auch möglich, dass die wässrige Polymerdispersion ein nicht strahlenhärtendes, z.B. luft-, forciert oder unter Einbrennbedingungen trocknendes Polymer und/oder Oligomer enthält, welches sowohl in einkomponentigen als auch in mehrkomponentigen Beschichtungsmitteln zum Einsatz kommen kann und gegebenenfalls Lösemittel enthalten kann. Hierunter fallen bevorzugt Verbindungen aus der Gruppe der Alkydharze, Phenolharze, Harnstoffharze, Melaminharze, gesättigten und ungesättigten Polyesterharze, Polyurethane, Polyurethanprepolymere, Polyisocyanate, mit Schutzgruppen verkappte Polyurethanprepolymere und Polyisocyanate, Polyole, Polymethyl(meth)acrylate und weiterer Polyalkyl(meth)acrylate, Polyvinylbutyrale, weitere Polyvinylacetale, Polyvinylacetate und Copolymere des Vinylacetats, Polyethylen, Copolymere des Ethylens oder Pfropfcopolymere des Polyethylens, insbesondere Ethylenacrylsäurecopolymere oder Maleinsäure-graft-Polyethylen, Poly-α-Olefine, insbesondere Polybuten, Polyvinylalkohole, Polyvinylchloride, Polyvinylidenchloride, chlorierte Polyethylene und andere chlorierte Polyolefine, Silikonharze und Epoxidharze.

Das Polymer weist dabei bevorzugt ein Molekulargewicht von mindestens 500 g/mol, besonders bevorzugt von mindestens 800 g/mol bis max. 500.000 g/mol auf. Als Polymere und/oder Oligomere kommen solche bevorzugt zur Verwendung, die wenigstens eine α,β-ethylenisch ungesättigte Gruppe pro Molekül aufweisen. Hierzu zählen Verbindungen aus der Gruppe der Polyurethan(meth)acrylate, Polyester (meth) acrylate, Polyether(meth)acrylate, Silikon(meth)acrylate und Novolacacrylate. Bevorzugt ist es dabei, wenn es sich bei den Polymeren/Oligomeren um dendritische und/oder hyperbranched Polyester-, Polyurethan-, Polyether(meth)acrylate, Epoxy(meth)acrylate, Polyalkyl(meth)acrylate handelt. Für den Fall, dass das Polymer/Oligomer ein Polyurethan ist, liegt das Molekulargewicht bevorzugt zwischen 5.000 und 50.000 g/mol, für Acrylcopolymere zwischen 10.000 und 500.000 g/mol.

Beispiele für die in der wässrigen Zusammensetzung enthaltenden Polymere und Oligomere sind:
Polyurethanacrylate z. B. Craynor CN 925, CN 981 der Cray Valley Kunstharze GmbH, Ebecryl EB 1290, Ebecryl 270 der UCB Chemie GmbH,
Polyesteracrylate, z. B. Laromer LR 8800 der BASF AG, Ebecryl EB 830 der UCB Chemie GmbH,
Polyetheracrylate, z. B. Craynor CN 503 der Cray Valley Kunstharze GmbH, Laromer 8997 der BASF AG,
Epoxyacrylate, z. B. Ebecryl EB 860 der UCB Chemie GmbH, Craynor CN 104 der Cray Valley Kunstharze GmbH,
dendritische Polyester/etheracrylate, z. B. Actilane 881 der Fa. Akzo Nobel UV Resins,
Polyalkyl(meth)acrylate, z. B. Craynor CN 301 der Cray Valley Kunstharze GmbH,
Silikon(meth)acrylate, z. B. Ebecryl EB 1360 der UCB Chemie GmbH,
Novolacacrylate, z. B. Craynor CN 112C60 der Cray Valley Kunstharze GmbH,
Alkydharze, z. B. Vialkyd TO 607/50 IRH der UCB Chemie GmbH, Uralac AN620 X-70 der DSM Coating Resins,
Phenolharze, z. B. Phenodur PR 401/72B der UCB Chemie GmbH,
Harnstoffharze, z. B. Plastopal EBS 400 B der BASF AG,
Melaminharze, z. B. Maprenal MF 915/75IB der UCB Chemie GmbH,
gesättigte Polyesterharze, z. B. Dynapol LH 831-24 der Degussa AG,
ungesättigte Polyesterharze, z. B. Roskydal 500 A der Bayer AG, Viapal UP 156 E/68 der UCB Chemie GmbH,

Polyurethanpolymere und ihre Vorstufen in Form der Polyisocyanate, Polyole, Polyurethanprepolymere, als verkapptes Prepolymer und als ausreagierte Polyurethane in Form einer Schmelze oder Lösung. Im einzelnen sind dies:
Polyole in Form von Polyethern, z. B. Voranol CP 3055 der Dow Chemicals, PolyTHF 2000 der BASF AG, Polyestern, z. B. Lupraphen 8107, Lupraphen 8109 der Elastogran GmbH, Desmophen 670 der Bayer AG, Oxyester T 1136 der Degussa AG,
Alkydharzen, z. B. WorléeKyd C 628 der Worlée Chemie GmbH,
Polycarbonaten z. B. Desmophen C 1200, Desmodur XP 2407 der Bayer AG,
hydroxylhaltigen Polyacrylaten, z. B. Desmophen A 365 der Bayer AG,
Polyisocyanate, z. B. Desmodur N 3300, Desmodur VL, Desmodur Z 4470 der Bayer AG, Vestanat T 1890 L der Degussa AG, Rhodocoat WT 2102 der Rhodia Syntech GmbH,
mit Schutzgruppen verkappte Polyisocyanate, z. B. Desmodur BL 3272 MPA der Bayer AG,
Polyurethanprepolymere, z. B. Desmodur E 4280 der Bayer AG, Vestanat EP-U 523A der Degussa AG,
mit Schutzgruppen verkappte Polyurethanprepolymere, z. B. Vesticoat UB 1256-06 der Degussa AG
Polymethylmethacrylat (PMMA) und weitere Poly(meth)alkylacrylate, z. B. Plexisol P 550 und Degalan LP 50/01 der Degussa AG,
Polyvinylbutyral und andere Polyvinylacetale, z. B. Mowital B 30 HH der Kuraray Specialties Europe GmbH,
Polyvinylacetat und seine Copolymere z. B. Vinnapas B 100 der Wacker-Chemie GmbH,
Polyvinylalkohole, z. B. Mowiol 20-98 der Kuraray Specialties Europe GmbH,
Polyvinylchloride, z. B. Laroflex MP 45 der BASF AG,
Silikonharze, z. B. Silres EP der Wacker-Chemie GmbH,
Epoxidharze, z. B. Beckopox EP 301, Beckopox EP 140 der UCB Chemie GmbH.
Copolymere des Vinylacetat, z. B. Veova 9 von Deutsche shell Chemie GmbH,
Polybutene, z. B. Polybutene 025 von Kemat Belgium S. A.
Polyvinylidenchloride (PVDC), z. B. IXAN PNE 275 von SolVin Solvay S. A.
Fischer-Tropsch-Wachse, z. B. Sasolwax C80 der Sasol Wax GmbH,
Paraffinwachse, z. B. Sasolwax 6805 der Sasol Wax GmbH,
mikronisierte Polyethylenwachse, z. B. Sasolwax 9480 der Sasol Wax GmbH,
Cumaron-Inden-Harze, z. B. Novarez C 80 der Rütgers Chemicals AG,
Carnaubawachs, z. B. von H. Erhard Wagner GmbH,
Montanwachs, z. B. Waradur B der Völpker Montanwachs GmbH,
Kolophoniumharz, z. B. von Keyser & Mackay GmbH,
Bienenwachs, z. B. Cera Alba von Fa. Kahl & Co. Vertriebsges. mbH,
Leinöl, z. B. Leinöl, geblasen von Alberdingk Boley GmbH.

Bei allen Polymeren sind sowohl die aliphatischen als auch die aromatischen und araliphatischen Varianten ausdrücklich eingeschlossen.

Bei den erfindungsgemäßen wässrigen Bindemitteldispersionen und -emulsionen weisen dabei die Polymerpartikel bevorzugt einen mittleren Teilchendurchmesser zwischen 30 und 500 nm, besonders bevorzugt zwischen 50 und 150 nm, auf. Die Nanopartikel, die in den Polymerpartikeln enthalten sind, müssen, da sie von dem Polymer des Polymerpartikels umhüllt sind, einen geringeren Partikeldurchmesser aufweisen als die Polymerpartikel selbst. Die anorganischen Nanopartikel können dabei einen Durchmesser von 1 bis 450 nm, bevorzugt von 1 bis 200 nm, aufweisen. Gemäß der vorliegenden Erfindung ist es dabei auch ausreichend, wenn die Nanopartikel nur oberflächlich von dem Polymer und/oder Oligomer überzogen sind. Auch derartige Polymerpartikel umfasst die vorliegende Erfindung.

Die wässrige Bindemitteldispersion nach der Erfindung enthält bevorzugt 5 bis 65 Vol-%, vorzugsweise 5 bis 50 Vol-%, Nanopartikel enthaltende Polymerpartikel, bezogen auf die gesamte Zusammensetzung. Es hat sich weiterhin als vorteilhaft erwiesen, wenn bei der Bindemitteldispersion nach der Erfindung 0,5 bis 30 Vol-% Nanopartikel, vorzugsweise 0,5 bis 25 Vol-%, besonders bevorzugt 8 bis 17 Vol-%, in den Polymerpartikeln enthalten sind. Die Menge der Nanopartikel in den Polymerpartikeln ist danach auszuwählen, welche Nanopartikel eingesetzt werden. Handelt es sich dabei um Nanopartikel hoher Dichte, wie z.B. Zirkoniumdioxid, so ist für das Erreichen gleicher Volumen-Füllgrade eine entsprechend größere Einwaage zu verwenden.

Die Nanopartikel sind vorzugsweise ausgewählt aus der Gruppe der Oxide, Mischoxide, Karbide, Boride und Nitride von Elementen der II. bis IV. Hauptgruppe und/oder Elemente der I. bis VIII. Nebengruppe des Periodensystems einschließlich der Lanthaniden. Besonders bevorzugt sind Nanopartikel aus Siliziumdioxid, Aluminiumoxid, Ceroxid, Zirkonoxid und Titandioxid.

Beispiele für Nanopartikel in Form von Pulvern sind Siliziumdioxide, z. B. pyrogene Kieselsäuren wie Aerosil 200, Aerosil TT 600, Aerosil OX 50 und Aerosil 7200 der Fa. Degussa AG oder mittels Plasmaverfahren hergestellte nanoskalige Siliziumdioxide, wie z. B. KADESIT040-100 der Fa. KDS NANO, Titandioxide wie pyrogenes Titandioxid P25 der Fa. Degussa AG, oder Hombitec RM 300 der Fa. Sachtleben Chemie GmbH, Aluminiumoxide, z. B. pyrogenes Aluminiumoxid C der Fa. Degussa AG oder z. B. mittels Plasmaverfahren hergestelltes PüreNano^{™} Aluminiumoxid der Fa. NanoProducts Corporation oder NanoDur^{™} Aluminiumoxid der Fa. Nanophase Technologies Corporation, zudem weitere nanoskalige Metalloxide, die mittels physikalisch-chemischer Verfahren, wie z. B. Flammenpyrolyse oder Plasmaprozessen, hergestellt werden, z. B. Ceroxide wie NanoTek Ceroxid der Fa. Nanophase Technologies Corporation, Zirkonoxide der Fa. inocermic GmbH oder NanoGard Zinkoxid der Fa. Nanophase Technologies Corporation, nanoskalige Bariumsulfate, z. B. Sachtoperse® HU-N der Fa. Sachtleben Chemie GmbH, Schichtsilikate, z. B. Nanofil® 15 der Fa. Süd-Chemie AG und nanoskalige Böhmite, z. B. Disperal der Fa. Sasol Chemical Industries Ltd.

Gemäß der vorliegenden Erfindung ist es weiterhin möglich, dass zusätzlich zu den in den Polymerpartikeln enthaltenen Nanopartikeln der wässrigen Dispersion noch, wie an und für sich bekannt, Nanopartikel in einer Menge von 0,5 bis 20 Vol-% zugesetzt werden. Von diesen Nanopartikeln kann dann auch bis zu 100 Vol-% durch Mikropartikel mit einer mittleren Teilchengröße zwischen 450 nm bis 200 µm ersetzt sein.

Beispiele für mikroskalige Teilchen sind Kieselsäuren, z. B. Acematt® OK 412 oder Acematt® TS 100 der Fa. Degussa AG, Kieselgele, z. B. Syloid ED 3 der Fa. Grace GmbH, Quarzmehle, z. B. Sikron Feinstmehl SF 3000 der Fa. Quarzwerke GmbH, Cristobalitmehle, z. B. Sibelite M 3000 der Fa. SRC Sibelco, Titandioxide, z. B. Hombitan® R 210 der Fa. Sachtleben Chemie GmbH, Aluminiumoxide, z. B. Martoxid DN-430 der Fa. Martinswerk GmbH, Zirkonsilikate, z. B. Zirkonsilikat 16 my der Fa. Helmut Kreutz GmbH, Kieselerden, z. B. Sillitin Z 89 der Fa. Hoffmann Mineral GmbH & Co. KG, Kieselgure, z. B. Celite 110 von World Minerals Inc., Talkum, z. B. Finntalc M 40 der Fa. Mondo Minerals Oy, Kaoline, z. B. China-Clay Grade D der Fa. Imerys, Glimmer, z. B. Mica MU-M 2/1 der Fa. Ziegler & Co. GmbH, Siliciumcarbide, z. B. Silcar G 14 der Fa, ESK-SIC GmbH, Feldspäte, z. B. Minex 2 der Fa. Unimin Canada Ltd., Wollastonite, z. B. Tremin 283-100 EST der Fa. Quarzwerke GmbH, Glasmehle, z. B. Boruvit B 200 der Fa. Ziegler & Co. GmbH, Aluminiumsilikate mit Quarz verwachsen, z. B. Siliplast 910 der Fa. Amberger Kaolinwerke Eduard Kick GmbH & Co KG, sowie alle durch Zerkleinerung oder Fällung herstellbaren mineralischen Stoffe.

Vorzugsweise sind die Nanopartikel an ihrer Oberfläche durch organische Verbindungen, die eine gegenüber dem Bindemittel und/oder den Edukten reaktive Gruppe aufweisen können, funktionalisiert. Beispiele für modifizierte Nanopartikelsysteme sind z. B. silanisierte pyrogene Kieselsäuren wie z. B. Aerosil 7200 der Fa. Degussa AG oder polymerisierbare Metalloxidnanopartikel (nach DE 198 46 660), die durch reaktive O-berflächenmodifizierung von Metalloxidnanopartikeln mit z. B. Silanen zugänglich sind.

Die reaktive Oberflächenmodifizierung der anorganischen/metalloxidischen Nanopartikel wird durch kovalente Anbindung von Substanzen erreicht, die mit funktionellen Gruppen der Oberfläche, vorzugsweise mit den Hydroxylgruppen, Additions- oder Kondensationsreaktionen eingehen können. In Anlehnung an das Verfahren der DE 198 46 660 werden hierfür Alkoxysilane der allgemeinen Formel (I):

R'₄₋ₓSi(OR)ₓ,

in welcher die Reste R gleich oder verschieden voneinander (vorzugsweise gleich), gegebenenfalls substituierte (vorzugsweise unsubstituierte) Kohlenwasserstoffgruppen mit 1 bis 8, bevorzugt 1 bis 6 und besonders bevorzugt 1 bis 4 Kohlenstoffatomen, darstellen (insbesondere Methyl oder Ethyl), die Reste R' gleich oder verschieden voneinander, jeweils eine gegebenenfalls substituierte Kohlenwasserstoffgruppe mit 1 bis 20 Kohlenstoffatomen darstellen und x 1,2 oder 3 ist, vorgeschlagen.

Beispiele für Reste R' in der obigen Formel sind Alkyl-, Alkenyl, Aryl-, Alkylaryl-, Arylalkyl, Arylalkenyl-, Alkenylaryl-Reste (vorzugsweise mit jeweils 1 bis 12 und insbesondere 1 bis 8 Kohlenstoffatomen und cyclische Formen einschließend), die durch Sauerstoff-, Schwefel-, Stickstoffatome oder die Gruppe NR" (R" = Wasserstoff oder C₁₋₄-Alkyl) unterbrochen sein können und einen oder mehrere Substituenten aus der Gruppe der Halogene und der gegebenenfalls substituierten Amino-, Amid-, Carboxy-, Mercapto-, Isocyanato-, Hydroxy-, Alkoxy-, Alkoxycarbonyl-, Acryloxy-, Methacryloxy- oder Epoxygruppen tragen können.

Besonders bevorzugt befindet sich unter den obigen Alkoxysilanen der allgemeinen Formel (I) mindestens eines, in welchem mindestens ein Rest R' über eine Gruppierung verfügt, die eine Polyadditions- (einschließlich Polymerisations-) oder Polykondensationsreaktion eingehen kann.

Bei dieser zur Polyadditions- oder Polykondensationsreaktion befähigten Gruppierung handelt es sich vorzugsweise um eine Amino-, Hydroxy-, Epoxygruppe oder (vorzugsweise aktivierte) Kohlenstoff-Kohlenstoff-Mehrfachbindungen (insbesondere Doppelbindungen), wobei eine (Meth)acryloylgruppe ein besonders bevorzugtes Beispiel für die letztgenannten Gruppierungen ist.

Demgemäß sind besonders bevorzugte organisch modifizierte Alkoxysilane der allgemeinen Formel (I) zur Verwendung in der vorliegenden Erfindung solche, in denen x 2 oder 3 und insbesondere 3 ist und ein Rest (der einzige Rest) R' für ω-Glycidyloxy-C₂₋₆-alkyl oder ω-(Meth)acryloxy-C₂₋₆-alkyl steht.

Konkrete Beispiele für derartige Silane sind 3-Glycidoxypropyltri(m)ethoxysilan, 3,4-Epoxybutyltrimethoxysilan und 2-(3,4-Epoxycyclohexyl)ethyltrimethoxysilan sowie 3-(Meth)acryloxypropyltri(m)e-thoxysilan und 2-(Meth)acryloxyethyltri(m)ethoxysilan. Weitere Beispiele für geeignete Verbindungen mit x = 1 oder 2 sind 3-Glycidoxypropyldimethyl(m)e-thoxysilan, 3-Glycidoxypropylmethyldi(m)ethoxysilan, 3-(Meth)-acryloxypropylmethyldi(m)ethoxysilan, 2-(Meth)acryloxyethylmethyldi(m)ethoxysilan, 3-Aminopropyltriethoxysilan, 3-Mercaptopropyltrimethoxysilan.

Die reaktive Oberflächenmodifizierung der anorganischen/metalloxidischen Nanopartikel kann jedoch im weitesten Sinne mit metallorganischen Verbindungen der allgemeinen Formel II

[(S-)₀-L-]ₘM(R)ₙ(H)p,

worin die Indizes und die Variablen die folgende Bedeutung haben:
- S: reaktive funktionelle Gruppe;
- L: mindestens zweibindige organische verknüpfende Gruppe;
- H: hydrolysierbare einbindige Gruppe oder hydrolisierbares Atom;
- M: zwei- bis sechswertiges Hauptgruppen- und Nebengruppen-Metall;
- R: einbindiger organischer Rest;
- o: eine ganze Zahl von 1 bis 5;
- m+n+p: eine ganze Zahl von 2 bis 6;
- p: eine ganze Zahl von 1 bis 6;
- m und n: Null oder eine ganze Zahl von 1 bis 5;
beispielsweise Isopropyltriisostearoyltitanat oder Neopentyl(diallyl)oxytrineodecanoylzirkonat, erfolgen.

Beispiele von Zubereitungen sind z. B. Acrylatbasierende Silicasole, z. B. HIGHLINK NanO G VTE 5968 der Fa. Clariant (France) S.A. oder z.B. Nanocryl XP 21/0930 der Fa. hanse chemie GmbH. Derartige Zubereitungen sind weiterhin durch in situ Organophilierung von metalloxidischen Nanopartikeln (z. B. nach DE 199 61 632), bevorzugt Siliziumdioxid und Aluminiumoxid, mit reaktiven organischen und/oder metallorganischen Verbindungen wie z. B. Übergangsmetallalkoxiden oder Silanen, bevorzugt bifunktionellen Silanen, wie. z. B. Vinyltrimethoxysilan oder 3-Glycidyloxypropyltrimethoxysilan, in organischen Oligomeren und Polymeren zugänglich.

Ebenso ist es aber auch möglich, dass die Nanopartikel an ihrer Oberfläche durch Wechselwirkung mit organischen Verbindungen modifiziert vorliegen. Beispiele mittels adsorptiver Partikelorganophilierung modifizierter Nanopartikel sind in WO 03/44099 beschrieben. Bevorzugt werden metalloxidische Nanopartikel, besonders bevorzugt Siliziumdioxid- und Aluminiumoxidnanopartikel, in Formulierungen von organischen Polymeren und/oder Oligomeren, bevorzugt in strahlenhärtenden Polymeren und/oder Oligomeren mit wenigstens einer α,β-ethylenisch ungesättigten Gruppe eingesetzt.

Nach einer bevorzugten Ausführungsform enthält die wässrige Zusammensetzung als Zusatzstoffe und Additive Schutzkolloide und/oder Emulgatoren, insbesondere Tenside, Amphiphile oder Säuren bzw. Basen als entsprechende Gegenionen für die Emulgierung ionischer Polymere oder Oligomere.

Die Dispergierung erfolgt vorzugsweise unter Verwendung von Emulgatoren. Nichtionische Tenside haben sich als Emulgatoren für die Dispergierung der strahlenhärtenden Acrylatpolymere und -oligomere in der wässrigen Phase als am besten geeignet erwiesen. Geeignete Emulgatoren sind gesättigte und ungesättigte Fettalkoholethoxilate mit 8 bis 15 C-Atomen im Fettalkylrest, Alkylphenolethoxilate mit 6 bis 13 C-Atomen im Alkylrest und 4 bis 100 Ethylenoxideinheiten, vorzugsweise Laurylalkoholethoxilate, Isotridekanolethoxilate sowie Octyl- und Nonylphenolethoxilate mit 6 bis 50 Ethylenoxideinheiten.

Gut geeignet sind auch Gemische solcher Emulgatoren aus einer hydrophilen und einer hydrophoben Komponente im Verhältnis 1:5 bis 5:1, z.B. aus einem Teil Laurylalkohol 4 EO und drei Teilen Laurylalkohol 40 EO. Die Emulgatoren werden in einer Gesamtmenge von 0 bis 15 Vol-% der Emulsion, vorzugsweise 0,8 bis 10 Vol-% der Emulsion eingesetzt.

Gut geeignet als Emulgatoren sind auch Ester und ethoxilierte Ester des Sorbitans wie sie unter den Marken Tween und Span angeboten werden. Vorzugsweise Tween 20 und Span 60 im Verhältnis 1:1 bis 1:7. Besonders vorzugsweise werden 3 bis 15 Vol-% des hydrophoben Emulgators durch Oleylsarcosid ersetzt.

Die erhaltenen Emulsionen sind lagerstabil, ohne Sedimentation und ohne Veränderung der Teilchengrößenverteilung.

Die Schutzkolloide und/oder Emulgatoren werden dabei bevorzugt in einer Menge von 0,1 bis 10 Vol-%, bezogen auf die gesamte Zusammensetzung, eingesetzt.

Vorzugsweise sind als Zusatzstoffe und Additive in der wässrigen Zusammensetzung Katalysatoren, Co-Katalysatoren, Radikalbildner, Photoinitiatoren, Photosensibilisatoren, Hydrophobierungsmittel, Mattierungsmittel, Gleitmittel, Entschäumer, Entlüfter, Netzmittel, Verlaufsmittel, Thixotropiermittel, Verdicker, anorganische und organische Pigmente, Füllstoffe, Haftvermittler, Korrosionsinhibitoren, UV-Stabilisatoren, HALS-Verbindungen, Radikalfänger, Antistatika und/oder Netzmittel enthalten.

Als Zusatzstoffe und Additive werden zusätzlich bevorzugt wasserlösliche, thermisch und/oder mit energiereicher Strahlung polymerisierbare Monomere, vorzugsweise (Meth)acrylsäure, (Meth)acrylamid, Hydroxyethyl(meth)acrylat, Vinylphosphonsäure und Vinylsulfonsäure eingesetzt.

Bevorzugt ist es weiterhin, wenn als Zusatzstoffe/Additive Ester der Meth(acrylsäure) mit verzweigten und/oder linearen C₁-C₁₅-Alkylresten eingesetzt werden.

Die wässrige Dispersion weist vorzugsweise eine Viskosität im Bereich von 1 bis 800 mPas bei 20° C auf.

Die Erfindung betrifft weiterhin ein Verfahren zur Herstellung einer wässrigen Bindemitteldispersion wie vorstehend beschrieben.

Grundsätzlich umfasst das Verfahren zur Herstellung der Erfindung zwei Alternativen (Patentanspruch 29 und Patentanspruch 30).

Nach einer ersten Variante wird vorgeschlagen, dass die Nanopartikel unter Scherung in eine wasserfrei vorgelegte Polymerphase eindispergiert werden und dass dann in einem zweiten Schritt die Nanopartikel enthaltenden Polymerpartikel durch emulgieren unter Scherung der Nanopartikel enthaltenden wasserfreien Polymerphase in Wasser und gegebenenfalls unter Zusatz eines Schutzkolloids und/oder Emulgators oder weiteren Zusatzstoffen und Additiven erhalten werden. Bei diesem Verfahren wird somit in einem vorgelagerten Schritt zuerst die wasserfreie, nanopartikelgefüllte Polymerphase hergestellt. Bei der Polymerphase kann es sich dabei um ein Hochpolymeres oder auch um ein Oligomeres handeln. Diese so hergestellte wasserfreie Polymerphase wird dann unter Scherung mit den Nanopartikeln vermischt und die so erhaltene Mischung aus der Polymerphase und den Nanopartikeln unter Scherung in eine wässrige Phase bzw. in eine kolloidale Phase eingearbeitet, wobei sich dann die entsprechenden Nanopartikel enthaltenden Polymerpartikel ausbilden. Das wie vorstehend beschriebene Verfahren ist dabei grundsätzlich für alle vorstehend beschriebenen Polymere anwendbar, besonders bevorzugt für Polyurethane und Polyacrylcopolymere.

Nach einer zweiten Variante wird gemäß der vorliegenden Erfindung vorgeschlagen, dass die Nanopartikel selbst als Edukte bereits bei der Herstellung der Polymere zugesetzt werden und dann die so hergestellten Polymere, die dann bereits die Nanopartikel enthalten unter Scherung wiederum in eine wässrige bzw. kolloidale Phase eingearbeitet werden.

Beim Herstellungsverfahren nach der zweiten Variante, d.h. bei dem Fall, bei dem die Edukte der Bindemittel und die Nanopartikel in einem "insitu-Verfahren" umgesetzt werden, ist es weiterhin vorteilhaft, wenn bei dieser Herstellung reaktive Verbindungen, die mit dem Bindemittel und/oder den Bindemittelvorstufen reagieren können und gleichzeitig kovalente oder adsorbtive Wechselwirkungen mit den Nanopartikeloberflächen eingehen können, zugesetzt werden. Geeignet sind beispielsweise Aminoalkohole, Aminocarbonsäuren, Polyaminocarbonsäuren, Polyamine, Epoxysilane, Alkoxysilane, die ethylenisch ungesättigte Gruppen enthalten, Mercaptosilane und Aminosilane.

Die erfindungsgemäßen wässrigen Zusammensetzungen finden Verwendung als Lack- und Beschichtungszusammensetzung. Bevorzugt werden sie dabei zur Herstellung von kratz-, abrieb- und haftfesten Schichten, Schichten mit erhöhter chemischer oder mechanischer Belastbarkeit und/oder Barriereschichten eingesetzt.

Anhand der folgenden Beispiele soll der anmeldungsgemäße Gegenstand näher erläutert werden, ohne diesen auf die hier genannten speziellen Ausführungsformen zu beschränken.

### Beispiel 1

### Herstellung des Nanopartikel-gefüllten strahlenhärtenden Acrylatpolymers I

An einem Hochleistungsdissolver versehen mit einer Zahnscheibe, einem offenen, heiz- und kühlbaren Rührgefäß und einem Thermometer wird bei 60°C ein Gemisch aus a) 5 Gewichtsteilen einer Lösung von 2 Gewichtsteilen eines Laurylsulfats (Sulfopon 101 spezial) und 1 Gewichtsteil Maleinsäureanhydrid in 97 Gewichtsteilen Wasser in b) ein Gemisch aus 100 Gewichtsteilen CN 925 versetzt mit 0,2 Gewichtsteilen BHT und 0,2 Gewichtsteilen MEHQ eingerührt. 102,4 Gewichtsteile des so erhaltenen Gemisches werden anschließend in mehreren gleichen Aliquoten mit 10 Gewichtsteilen Dynasylan VTMO und 22,5 Gewichtsteilen Aerosil OX 50 versetzt und intensiv gemischt und nach dem vollständigen Eintrag des Dynasylans und des Aerosils unter Scherung bei ca. 80°C 4 Std. ausreagiert. Um eine Überhitzung des strahlenhärtenden Acrylatpolymers durch Eintrag der Rührenergie zu unterbinden, ist die Behälterwand gegebenenfalls zu kühlen. Anschließend wird das Nanopartikel-gefüllte strahlenhärtende Acrylatpolymer I auf Raumtemperatur abgekühlt. Die entstandene viskose Masse besitzt eine mittlere Viskosität von 10,0 +/- 3 Pas bei 40°C.

### Beispiel 2

### Herstellung des Nanopartikel-gefüllten strahlenhärtenden Acrylatpolymers II

An einem Hochleistungsdissolver versehen mit einer Zahnscheibe, einem offenen, heiz- und kühlbaren Rührgefäß und einem Thermometer wird ein Gemisch aus 100 Gewichtsteilen Ebecryl EB 270 mit 0,8 Gewichtsteilen Propyltrimethoxysilan und 0,2 Gewichtsteilen MEHQ vorgelegt, intensiv gerührt und in mehreren Portionen 30 Gewichtsteile Aluminiumoxid C (pyrogenes Aluminiumoxid, Degussa AG) zugegeben. Bei Überschreiten einer Temperatur von 60°C wird gekühlt, Nach der vollständigen Zugabe wird 2 Stunden bei 60°C nachgerührt. Anschließend wird das fertige Nanopartikel-gefüllte strahlenhärtende Acrylatpolymer II auf Raumtemperatur abgekühlt. Die entstandene viskose Masse besitzt eine charakteristische Viskositätskurve II über der Schergeschwindigkeit und eine mittlere Viskosität von 20 +/-1 Pas bei 40°C.

### Beispiel 3

### Herstellung der wässrigen Emulsion des Nanopartikel-gefüllten strahlenhärtenden Acrylatpolymers I

Am Hochleistungsdissolver versehen mit einer Zahnscheibe, einem offenen, heiz- und kühlbaren Rührgefäß und einem Thermometer werden 60 Gewichtsteile Wasser, 2 Gewichtsteile Laurylalkohol-3-EO und 2 Gewichtsteile Laurylakohol-40-EO vorgelegt und auf 60°C erwärmt. Anschließend werden unter starker Scherung 40 Gewichtsteile des Nanopartikel-gefüllten strahlenhärtenden Acrylatpolymers I, welches vorher ebenfalls auf 60 °C vorgewärmt wurde, innerhalb 10 min. zugegeben. Es entsteht eine weiße Emulsion mit einer mittleren Teilchengröße von 290 nm und einem Teilchengrößenverteilungskoeffizienten von 6. Durch anschließende Nachbehandlung (nachträgliche Scherung) des Emulgieransatzes mit einem Ultraturrax (Rotor-Stator-Dispergierkopf, Fa. Jahnke & Kunkel) innerhalb 10 min. erfolgt die Feindispergierung bis zu einer Teilchengröße von 190 nm und einem Teilchengrößenverteilungskoeffizienten von 4.

Die erhaltene Emulsion I ist lagerstabil und kann mittels Spritzen verarbeitet werden.

### Beispiel 4

### Herstellung der wässrigen Emulsion des Nanopartikel-gefüllten strahlenhärtenden Acrylatpolymers II

Am Hochleistungsdissolver versehen mit einer Zahnscheibe, einem offenen, heiz- und kühlbaren Rührgefäß und einem Thermometer werden 40 Gewichtsteile des Nanopartikel-gefüllten strahlenhärtenden Acrylatpolymers II vorgelegt und auf 60°C erwärmt. Anschließend werden unter starker Scherung 60 Gewichtsteile Wasser, 2 Gewichtsteile Laurylalkohol-3-EO und 2 Gewichtsteile Laurylalkohol-40-EO, welche vorher ebenfalls auf 60°C vorgewärmt wurde, innerhalb 10 min. zugegeben. Unter Durchlaufen eines Viskositätsberges entsteht eine weiße Emulsion mit einer mittleren Teilchengröße von 260 nm und einem Teilchengrößenverteilungskoeffizienten von 5. Durch anschließende Nachbehandlung (nachträgliche Scherung) des Emulgieransatzes mit einem Ultraturrax (Rotor-Stator-Dispergierkopf, Fa. Jahnke & Kunkel) innerhalb 10 min. erfolgt die Feindispergierung bis zu einer Teilchengröße von 120 nm und einem Teilchengrößenverteilungskoeffizienten von 3.

Die erhaltene Emulsion I ist lagerstabil und kann mittels Spritzen verarbeitet werden.

### Beispiel 5

100 Gewichtsteile der im Emulgierbeispiel 1 erhaltenen wässrigen Emulsion des Nanopartikel-gefüllten strahlenhärtenden Acrylatpolymers I werden mit 3 Gewichtsteilen eines wasserlöslichen Azostarters (Wako V 44 der Fa. Wako) versetzt und 10 min. bei RT bis zur vollständigen Lösung des Starters gerührt. Anschließend wird die gebrauchsfertige Emulsion auf eine waagerecht liegende 10 cm x 10 cm Platte aus ABS mittels HVLP-Pistole im Kreuzgang gespritzt und mindestens 5 min. bei RT abdunsten gelassen bis sich ein klarer, geschlossener, allerdings klebriger Film mit einer Schichtstärke von 12 µm auf der Oberfläche ausgebildet hat. Die so beschichtete Platte wird anschließend unter einer N₂-inertisierten UV-Lampe (160 W/cm, Bandgeschwindigkeit 10m/min., 50-250 ppm Sauerstoff) hindurchgeführt. Die Schicht ist sofort ausgehärtet.

### Beispiel 6

100 Gewichtsteile der im Emulgierbeispiel 2 erhaltenen wässrigen Emulsion des Nanopartikel-gefüllten strahlenhärtenden Acrylatpolymers II werden mit 3 Gewichtsteilen eines wasserlöslichen Fotoinitiators Irgacure 500 und 10 min. bei RT bis zur vollständigen Lösung des Starters gerührt und anschließend 4 Gewichtsteile eines handelsüblichen PU-Verdickers (Tafigel PUR 61, Fa. Münzing Chemie Heilbronn) versetzt und bis zur Einstellung einer leicht cremigen Konsistenz unter Scherung (Auslaufzeit 45 Sek. im 4 mm DIN-Becher) gerührt. Anschließend wird der gebrauchsfertige Lack auf einen senkrecht rotierenden Zylinder von 10 cm Höhe und einem Durchmesser von 50 mm aus grundiertem Holz mittels HVLP-Pistole im Kreuzgang gespritzt und mindestens 5 min. bei RT abdunsten gelassen bis sich ein klarer, geschlossener, allerdings klebriger Film mit einer Schichtstärke von 15 µm auf der Oberfläche ausgebildet hat. Der so beschichtete Zylinder wird anschließend in einem innenverspiegelten 60-Liter-Fass mit CO₂-Atmosphäre (<500 ppm Sauerstoff) unter einer UVA-Lampe (400 W, 30 Sek. Bestrahlung) ausgehärtet. Die Schicht ist anschließend vollständig durchgehärtet.

### Beispiel 7 - Synthesebeispiel

In einem Glaskolben, ausgerüstet mit Rührer, Thermometer, Rückflusskühler und Pressluftüberleitung, wurden 187,4 g Polyesteracrylat mit einer Hydroxylzahl von 80 mg KOH/g (Handelsnahme Laromer LR 8800 der Firma BASF) und 31,5 g N-Ethylpyrrolidon vorgelegt.

Zu dieser Einwaage wurden 0,06 g 3-tert-Butyl-4-Hydroxy-anisol zugesetzt. Anschließend wurde über einen Tropftrichter 83,9 g 4,4'-Dicyclohexylmethandiisocyanat (Handelsname Desmodur W der Firma Bayer AG) zugetropft.

Die gesamte Einwaage wurde bei 70 °C unter Pressluftüberleitung verrührt und bis zu einem NCO-Gehalt von <= 5,0 % umgesetzt. Die Reaktion wurde acidimetrisch verfolgt.

Danach wurden 9,5 g Dimethylolpropionsäure und 7,2 g Triethylamin zugesetzt.

Die Mischung wurde weiter bei 75 °C bis zu einem NCO-Gehalt von 2,8 % umgesetzt.

### Dispergierung

Nach dem Ende der Reaktion wurde das NCO-terminierte Präpolymer unter heftigem Rühren in einer Mischung aus 469 g demineralisiertem Wasser, 7,8 g Monoethanolamin und 206 g Bindzil 305 FG (wässriges Kieselsol mit FKG von 30 % der Firma EKA Chemicals) dispergiert.

Es wurde eine Dispersion mit folgenden Kenndaten erhalten:
Viskosität: 25 mPAS
pH-Wert: 8,2
Festkörpergehalt: 35,4 %

### Vergleichsbeispiele

Die Nanopartikel-gefüllten strahlenhärtenden Acrylatpolymere I und II sind unter den Bedingungen von Applikationsbeispiel 1 und 2 nicht verarbeitbar. Eine Schichtdicke von 10 bis 12 µm ist aufgrund der hohen Viskosität auch mit keinem anderen der bekannten Applikationsverfahren (Rakeln, Rollen, Walzen, Gießen) zu erreichen.

## Patentansprüche

1. Wässrige Bindemitteldispersion aus einem polymeren und/oder oligomeren organischen Bindemittel und anorganischen Nanopartikeln
**dadurch gekennzeichnet,**
**dass** sie in Wasser oder einer wässrigen kolloidalen Lösung dispergierte, nanoskalige Polymerpartikel, die die anorganischen Nanopartikel umhüllen, enthält.

2. Wässrige Bindemitteldispersion nach Anspruch 1,
**dadurch gekennzeichnet, dass** der mittlere Teilchendurchmesser der Polymerpartikel zwischen 30 und 500 nm liegt.

3. Wässrige Bindemitteldispersion nach Anspruch 2,
**dadurch gekennzeichnet, dass** der mittlere Teilchendurchmesser 50 bis 150 nm ist.

4. Wässrige Bindemitteldispersion nach einem der vorhergehenden Ansprüche,
**dadurch gekennzeichnet, dass** das mindestens eine polymere und/oder oligomere Bindemittel strahlenhärtend ist.

5. Wässrige Bindemitteldispersion nach einem der vorhergehenden Ansprüche,
**dadurch gekennzeichnet, dass** das mindestens eine in Wasser emulgierbare polymere und/oder oligomere Bindemittel wenigstens eine α,β-ethylenisch ungesättigte Gruppe pro Molekül aufweist.

6. Wässrige Bindemitteldispersion nach einem der vorhergehenden Ansprüche,
**dadurch gekennzeichnet, dass** das mindestens eine polymere und/oder oligomere Bindemittel ausgewählt ist aus der Gruppe der Polyurethan(meth)acrylate, Polyester(meth)acrylate, Polyether(meth)acrylate, Epoxy(meth)acrylate, Polyalkyl(meth)acrylate, Silikon(meth)acrylate und Novolacäcrylate.

7. Wässrige Bindemitteldispersion nach Anspruch 6,
**dadurch gekennzeichnet, dass** das mindestens eine polymere und/oder oligomere Bindemittel aus dendritischen und/oder hyperbranched Polyester-, Polyurethan- und/oder Polyether(meth)acrylaten ausgewählt ist.

8. Wässrige Bindemitteldispersion nach einem der Ansprüche 1 bis 3,
**dadurch gekennzeichnet, dass** das mindestens eine polymere und/oder oligomere Bindemittel nicht strahlenhärtend ist.

9. Wässrige Bindemitteldispersion nach Anspruch 7,
**dadurch gekennzeichnet, dass** das mindestens eine polymere und/oder oligomere Bindemittel ausgewählt ist aus der Gruppe der Alkydharze, Phenolharze, Harnstoffharze, Melaminharze, gesättigten und ungesättigten Polyesterharze, Polyurethane, Polyurethan-prepolymere, Polyisosocyanate, mit Schutzgruppen verkappter Polyurethanprepolymere und Polyisocyanate, Polyole, Polymethylmethacrylate und weiterer Polyalkyl(meth)acrylate, Polyvinylbutyrale, weitere Polyvinylacetale, Polyvinylacetate und Copolymere des Vinylacetats, Polyethylen, Copolymere des Ethylens oder
Pfropfcopolymere des Polyethylens, oder Maleinsäuregraft-Polyethylen, Poly-α-Olefine, Polyvinylalkohole, Polyvinylchloride, Polyvinylidenchloride, chlorierte Polyethylene und andere chlorierte Polyolefine, Silikonharze und Epoxidharze sowie synthesische oder natürliche Wachse, synthesische oder natürliche Harze oder synthesische oder natürliche Öle.

10. Wässrige Bindemitteldispersion nach einem der vorhergehenden Ansprüche,
**dadurch gekennzeichnet, dass** das mindestens eine polymere und/oder oligomere Bindemittel ein Molekulargewicht von mindestens 500 g/mol, 500.000 g/mol aufweist.

11. Wässrige Bindemitteldispersion nach Anspruch 10,
**dadurch gekennzeichnet, dass** das mindestens eine polymere und/oder oligomere Bindemittel ein Polyurethan mit einem Molekulargewicht von 5.000 bis 50.000 g/mol ist.

12. Wässrige Bindemitteldispersion nach Anspruch 10,
**dadurch gekennzeichnet, dass** das mindestens eine polymere und/oder oligomere Bindemittel ein Acrylcopolymer mit einem Molekulargewicht von 10.000 bis 500.000 g/mol ist.

13. Wässrige Bindemitteldispersion nach einem der vorhergehenden Ansprüche,
**dadurch gekennzeichnet, dass** die anorganischen Nanopartikel einen Durchmesser von 1 bis 450 nm, aufweisen.

14. Wässrige Bindemitteldispersion nach einem der vorhergehenden Ansprüche,
**dadurch gekennzeichnet, dass** die Nanopartikel agglomeriert und/oder desagglomeriert vorliegen.

15. Wässrige Bindemitteldispersion nach einem der vorhergehenden Ansprüche,
**dadurch gekennzeichnet, dass** die Nanopartikel in monomodaler und/oder multimodaler Teilchengrößenverteilung vorliegen.

16. Wässrige Bindemitteldispersion nach einem der vorhergehenden Ansprüche,
**dadurch gekennzeichnet, dass** die Nanopartikel ausgewählt sind aus der Gruppe der Oxide und/oder Mischoxide, Karbide, Boride und Nitride von Elementen der zweiten bis vierten Hauptgruppe und/oder Elementen der ersten bis achten Nebengruppe des Periodensystems einschließlich der Lanthaniden.

17. Wässrige Bindemitteldispersion nach Anspruch 16,
**dadurch gekennzeichnet, dass** die Nanopartikel ausgewählt sind aus der Gruppe Siliziumdioxid, Aluminiumoxid, Ceroxid, Zirkonoxid und Titandioxid.

18. Wässrige Bindemitteldispersion nach einem der vorhergehenden Ansprüche,
**dadurch gekennzeichnet, dass** die Nanopartikel an ihrer Oberfläche durch organische Verbindungen funktionalisiert sind.

19. Wässrige Bindemitteldispersion nach Anspruch 18,
**dadurch gekennzeichnet, dass** die organischen Verbindungen chemisch an die Partikeloberfläche gebunden oder durch Wechselwirkung adsorbtiv gebunden sind.

20. Wässrige Bindemitteldispersion nach einem der vorhergehenden Ansprüche,
**dadurch gekennzeichnet, dass** 5 bis 65 Vol-% anorganische Nanopartikel enthaltende Polymerpartikel, bezogen auf die gesamte Zusammensetzung, enthalten sind.

21. Wässrige Bindemitteldispersion nach Anspruch 20,
**dadurch gekennzeichnet, dass** 0,5 bis 30 Vol-% anorganische Nanopartikel in den Polymerpartikeln enthalten sind.

22. Wässrige Bindemitteldispersion nach einem der vorhergehenden Ansprüche,
**dadurch gekennzeichnet, dass** zusätzlich 0,5 bis 20 Vol-% anorganische Nanopartikel in der wässrigen Phase der Polymerdispersion, bezogen auf die gesamte Zusammensetzung, enthalten sind.

23. Wässrige Bindemitteldispersion nach Anspruch 19,
**dadurch gekennzeichnet, dass** bis zu 100 Vol-% der zusätzlichen Nanopartikel durch Mikropartikel mit einer mittleren Teilchengröße zwischen 450 nm bis 200 µm ersetzt sind.

24. Wässrige Bindemitteldispersion nach einem der vorhergehenden Ansprüche,
**dadurch gekennzeichnet, dass** als Zusatzstoffe und Additive Schutzkolloide und/oder Emulgatoren, Tenside, Amphiphile, und für die Emulgierung ionischer Polymere oder Oligomere Säuren oder Basen als Gegenionen enthalten sind.

25. Wässrige Bindemitteldispersion nach einem der vorhergehenden Ansprüche,
**dadurch gekennzeichnet, dass** 0,1 bis 10 Vol-% des Schutzkolloids und/oder Emulgators, bezogen auf die gesamte Zusammensetzung, enthalten sind.

26. Wässrige Bindemitteldispersion nach einem der vorhergehenden Ansprüche,
**dadurch gekennzeichnet, dass** als Zusatzstoffe und Additive Katalysatoren, Co-Katalysatoren, Radikalbildner, Photoinitiatoren, Photosensibilisatoren, Hydrophobierungsmittel, Mattierungsmittel, Gleitmittel, Entschäumer, Entlüfter, Netzmittel, Verlaufmittel, Thixotropiermittel, Verdicker, anorganische und organische Pigmente, Füllstoffe, Haftvermittler, Korrosionsinhibitoren, UV-Stabilisatoren, HALS-Verbindungen, Radikalfänger und/oder Antistatika enthalten sind.

27. Wässrige Bindemitteldispersion nach einem der vorhergehenden Ansprüche, **dadurch gekennzeichnet, dass** als Zusatzstoffe/Additive, polymerisierbare Monomere, enthalten sind.

28. Wässrige Bindemitteldispersion nach Anspruch 27,
**dadurch gekennzeichnet, dass** als Zusatzstoffe/Additive Ester der Meth(acrylsäure) mit verzweigten und/oder linearen C₁-C₁₆-Alkylresten eingesetzt werden.

29. Verfahren zur Herstellung einer wässrigen Bindemitteldispersion nach einem der Ansprüche 1 bis 28 bei dem die anorganischen Nanopartikel unter Scherung in eine wasserfrei vorgelegte Polymerphase eindispergiert und die Nanopartikel enthaltenden Polymerpartikel durch Emulgieren unter Scherung der Nanopartikel enthaltenden wasserfreien Polymerphase in Wasser und gegebenenfalls unter Zusatz eines Schutzkolloids und/oder Emulgators oder weiterer Zusatzstoffe und Additive erhalten werden.

30. Verfahren zur Herstellung einer wässrigen Polymerdispersion nach einem der Ansprüche 1 bis 28,
**dadurch gekennzeichnet, dass** die Nanopartikel als Edukte bei der Herstellung der Polymere zugesetzt und die Nanopartikel enthaltenden Polymerpartikel durch emulgieren unter Scherung des Nanopartikel enthaltenden Polymers in Wasser und gegebenenfalls unter Zusatz eines Schutzkolloids und/oder Emulgators oder weiteren Zusatzstoffen und Additiven erhalten werden.

31. Verfahren nach einem der Ansprüche 26 oder 27,
**dadurch gekennzeichnet, dass** das Bindemittel Polyurethan ist.

32. Verfahren nach dem Anspruch 29, 30 oder 31,
**dadurch gekennzeichnet, dass** bei der Herstellung reaktive Verbindungen zugesetzt werden.

33. Verfahren nach Anspruch 32,
**dadurch gekennzeichnet, dass** die reaktiven Verbindungen Aminoalkohole mit primären und/oder sekundäre Aminogruppen sind.

34. Verfahren nach Anspruch 33,
**dadurch gekennzeichnet, dass** die reaktiven Verbindungen ausgewählt sind aus der Gruppe der Aminocarbonsäuren, Polyaminocarbonsäuren, Gelatinen und/oder Aminosilanen.

35. Verfahren nach mindestens einem der Ansprüche 29 bis 34,
**dadurch gekennzeichnet, dass** die Herstellung der Polymerpartikel durch eine Emulsionspolymersation erfolgt.

36. Verwendung der wässrigen Bindemitteldispersion nach einem der Ansprüche 1 bis 28 in Beschichtungs- oder Klebstoffzusammensetzungen.

37. Verwendung der wässrigen Bindemitteldispersion nach Anspruch 36 zur Herstellung von kratz-, abrieb- und haftfesten Schichten, Schichten mit erhöhter chemischer oder mechanischer Belastbarkeit und/oder erhöhtem UV-Licht und/oder Witterungsbeständigkeit und/oder Barriereschichten.

## Claims

1. An aqueous binder dispersion comprising a polymeric and/or oligomeric organic binder and inorganic nanoparticles, **characterised in that** it contains nanoscale polymer particles which are dispersed in water or an aqueous colloidal solution and which cover the inorganic nanoparticles.

2. An aqueous binder dispersion according to claim 1, **characterised in that** the average particle diameter of the polymer particles lies between 30 and 500 nm.

3. An aqueous binder dispersion according to claim 2, **characterised in that** the average particle diameter is 50 to 150 nm.

4. An aqueous binder dispersion according to any one of the preceding claims, **characterised in that** the at least one polymeric and/or oligomeric binder is radiation curable.

5. An aqueous binder dispersion according to any one of the preceding claims, **characterised in that** the at least one polymeric and/or oligomeric binder, which is emulsifiable in water, has at least one α,β-ethylene unsaturated group per molecule.

6. An aqueous binder dispersion according to any one of the preceding claims, **characterised in that** the at least one polymeric and/or oligomeric binder is selected from the group consisting of the polyurethane (meth)acrylates, polyester (meth)acrylates, polyether (meth)acrylates, epoxy (meth)acrylates, polyalkyl (meth)acrylates, silicone (meth)acrylates and novolak acrylates.

7. An aqueous binder dispersion according to claim 6, **characterised in that** the at least one polymeric and/or oligomeric binder is selected from dendritic and/or hyperbranched polyester, polyurethane and/or polyether (meth)acrylates.

8. An aqueous binder dispersion according to any one of claims 1 to 3, **characterised in that** the at least one polymeric and/or oligomeric binder is not radiation curable.

9. An aqueous binder dispersion according to claim 7, **characterised in that** the at least one polymeric and/or oligomeric binder is selected from the group consisting of the alkyd resins, phenolic resins, urea resins, melamine resins, saturated and unsaturated polyester resins, polyurethanes, polyurethane prepolymers, polyisocyanates, polyurethane prepolymers and polyisocyanates masked with protective groups, polyols, polymethyl methacrylates and further polyalkyl (meth)acrylates, polyvinyl butyrals, further polyvinyl acetals, polyvinyl acetates and copolymers of the vinyl acetate, polyethylene, copolymers of the ethylene or graft copolymers of the polyethylene, or maleic acid-graft-polyethylene, poly-α-olefins, polyvinyl alcohols, polyvinyl chlorides, polyvinylidene chlorides, chlorinated polyethylenes and other chlorinated polyolefins, silicone resins and epoxide resins and synthetic or natural waxes, synthetic or natural resins or synthetic or natural oils.

10. An aqueous binder dispersion according to any one of the preceding claims, **characterised in that** the at least one polymeric and/or oligomeric binder has a molecular weight of at least 500 g/mol up to a maximum of 500,000 g/mol.

11. An aqueous binder dispersion according to claim 10, **characterised in that** the at least one polymeric and/or oligomeric binder is a polyurethane with a molecular weight of 5,000 to 50,000 g/mol.

12. An aqueous binder dispersion according to claim 10, **characterised in that** the at least one polymeric and/or oligomeric binder is an acrylic copolymer with a molecular weight of 10,000 to 500,000 g/mol.

13. An aqueous binder dispersion according to any one of the preceding claims, **characterised in that** the inorganic nanoparticles have a diameter of 1 to 450 nm.

14. An aqueous binder dispersion according to any one of the preceding claims, **characterised in that** the nanoparticles are present in agglomerated and/or deagglomerated form.

15. An aqueous binder dispersion according to any one of the preceding claims, **characterised in that** the nanoparticles are present with monomodal and/or multimodal particle-size distribution.

16. An aqueous binder dispersion according to any one of the preceding claims, **characterised in that** the nanoparticles are selected from the group consisting of the oxides and/or mixed oxides, carbides, borides and nitrides of elements from the second to fourth main group and/or elements from the first to eighth subgroup of the periodic table, including the lanthanides.

17. An aqueous binder dispersion according to claim 16, **characterised in that** the nanoparticles are selected from the group consisting of silicon dioxide, aluminium oxide, cerium oxide, zirconium oxide and titanium dioxide.

18. An aqueous binder dispersion according to any one of the preceding claims, **characterised in that** the nanoparticles are functionalised on their surface by organic compounds.

19. An aqueous binder dispersion according to claim 18, **characterised in that** the organic compounds are chemically bound to the particle surface or adsorptively bound by interaction.

20. An aqueous binder dispersion according to any one of the preceding claims, **characterised in that** it contains polymer particles containing 5 to 65 vol.% of inorganic nanoparticles, based on the whole composition.

21. An aqueous binder dispersion according to claim 20, **characterised in that** 0.5 to 30 vol.% of inorganic nanoparticles are contained in the polymer particles.

22. An aqueous binder dispersion according to any one of the preceding claims, **characterised in that** 0.5 to 20 vol.% of inorganic nanoparticles are additionally contained in the aqueous phase of the polymer dispersion, based on the whole composition.

23. An aqueous binder dispersion according to claim 19, **characterised in that** up to 100 vol.% of the additional nanoparticles are replaced by microparticles having an average particle size of 450 nm to 200 µm.

24. An aqueous binder dispersion according to any one of the preceding claims, **characterised in that** it contains, as supplements and additives, protective colloids and/or emulsifiers, surfactants, amphiphiles and, for the emulsification of ionic polymers or oligomers, acids or bases as counter ions.

25. An aqueous binder dispersion according to any one of the preceding claims, **characterised in that** it contains 0.1 to 10 vol.% of the protective colloid and/or emulsifier, based on the whole composition.

26. An aqueous binder dispersion according to any one of the preceding claims, **characterised in that** it contains, as supplements and additives, catalysts, co-catalysts, radical formers, photoinitiators, photosensitisers, hydrophobing agents, matting agents, lubricants, defoamers, deaerators, wetting agents, flow-control agents, thixotroping agents, thickeners, inorganic and organic pigments, fillers, adhesion promoters, corrosion inhibitors, UV stabilisers, HALS compounds, free-radical scavengers and/or antistatic agents.

27. An aqueous binder dispersion according to any one of the preceding claims, **characterised in that** it contains polymerisable monomers as supplements/additives.

28. An aqueous binder dispersion according to claim 27, **characterised in that** esters of (meth)acrylic acid with branched and/or linear C₁-C₁₆ alkyl residues are used as supplements/additives.

29. A process for producing an aqueous binder dispersion according to any one of claims 1 to 28, in which the inorganic nanoparticles are dispersed into a water-free polymer phase under shear, and the polymer particles containing nanoparticles are obtained by emulsification, under shear, of the water-free polymer phase containing nanoparticles in water and optionally with the addition of a protective colloid and/or emulsifier or further supplements and additives.

30. A process for producing an aqueous polymer dispersion according to any one of claims 1 to 28, **characterised in that** the nanoparticles are added as educts in the production of the polymers, and the polymer particles containing nanoparticles are obtained by emulsification, under shear, of the polymer containing nanoparticles in water and optionally with the addition of a protective colloid and/or emulsifier or further supplements and additives.

31. A process according to either one of claims 26 and 27, **characterised in that** the binder is polyurethane.

32. A process according to claim 29, 30 or 31, **characterised in that** reactive compounds are added during production.

33. A process according to claim 32, **characterised in that** the reactive compounds are amino alcohols with primary and/or secondary amino groups.

34. A process according to claim 33, **characterised in that** the reactive compounds are selected from the group consisting of the aminocarboxylic acids, polyaminocarboxylic acids, gelatins and/or aminosilanes.

35. A process according to at least one of claims 29 to 34, **characterised in that** the polymer particles are produced by emulsion polymerisation.

36. Use of the aqueous binder dispersion according to any one of claims 1 to 28 in coating or adhesive compositions.

37. Use of the aqueous binder dispersion according to claim 36 for the production of scratch-resistant, abrasion-resistant and adhesive coatings, coatings with increased chemical or mechanical loadability and/or increased UV light and/or weather-resistance and/or barrier layers.

## Revendications

1. Dispersion aqueuse de liant à base d'un liant organique polymère et/ou oligomère et de nanoparticules inorganiques,
**caractérisée en ce qu'**elle contient des particules polymères nanométriques, qui enveloppent les nanoparticules inorganiques, sous forme dispersée dans de l'eau ou dans une solution aqueuse colloïdale.

2. Dispersion aqueuse de liant selon la revendication 1,
**caractérisée en ce que** le diamètre particulaire moyen des particules polymères se situe entre 30 et 500 nm.

3. Dispersion aqueuse de liant selon la revendication 2,
**caractérisée en ce que** le diamètre particulaire moyen est de 50 à 150 nm.

4. Dispersion aqueuse de liant selon l'une quelconque des revendications précédentes,
**caractérisée en ce que** le au moins un liant polymère et/ou oligomère est durcissable par rayonnement.

5. Dispersion aqueuse de liant selon l'une quelconque des revendications précédentes,
**caractérisée en ce que** le au moins un liant polymère et/ou oligomère émulsionnable dans l'eau présente au moins un groupement à insaturation α,β-éthylénique par molécule.

6. Dispersion aqueuse de liant selon l'une quelconque des revendications précédentes,
**caractérisée en ce que** le au moins un liant polymère et/ou oligomère est choisi dans le groupe constitué des (méth)acrylates de polyuréthanne, des (méth)acrylates de polyester, des (méth)acrylates de polyéther, des époxy(méth)acrylates, des poly((méth)acrylates d'alkyle), des (méth)acrylates de silicone et des acrylates de novolaque.

7. Dispersion aqueuse de liant selon la revendication 6,
**caractérisée en ce que** le au moins un liant polymère et/ou oligomère est choisi parmi les (méth)acrylates de polyester, de polyuréthanne et/ou de polyéther dendritiques et/ou hyper-ramifiés.

8. Dispersion aqueuse de liant selon l'une quelconque des revendications 1 à 3,
**caractérisée en ce que** le au moins un liant polymère et/ou oligomère n'est pas durcissable par rayonnement.

9. Dispersion aqueuse de liant selon la revendication 7,
**caractérisée en ce que** le au moins un liant polymère et/ou oligomère est choisi dans le groupe constitué des résines alkydes, des résines phénoliques, des résines d'urée, des résines de mélamine, des résines de polyester saturé et insaturé, des polyuréthannes, des prépolymères de polyuréthanne, des polyisocyanates, des prépolymères de polyuréthanne et des polyisocyanates porteurs de groupements protecteurs, des polyols, des poly((méth)acrylates de méthyle) et d'autres poly((méth)acrylates d'alkyle), des polyvinylbutyrals, d'autres polyvinylacétals, des poly(acétates de vinyle) et des copolymères d'acétate de vinyle, du polyéthylène, des copolymères d'éthylène ou des copolymères greffés de polyéthylène ou du polyéthylène greffé avec de l'acide maléique, des poly-α-oléfines, des poly(alcools de vinyle), des poly(chlorures de vinyle), des poly(chlorures de vinylidène), des polyéthylènes chlorés et d'autres polyoléfines chlorées, des résines de silicone et des résines époxydes, ainsi que des cires synthétiques ou naturelles, des résines synthétiques ou naturelles ou des huiles synthétiques ou naturelles.

10. Dispersion aqueuse de liant selon l'une quelconque des revendications précédentes,
**caractérisée en ce que** le au moins un liant polymère et/ou oligomère a un poids moléculaire d'au moins 500 g/mole à 500 000 g/mole au maximum.

11. Dispersion aqueuse de liant selon la revendication 10,
**caractérisée en ce que** le au moins un liant polymère et/ou oligomère est un polyuréthanne ayant un poids moléculaire de 5000 à 50 000 g/mole.

12. Dispersion aqueuse de liant selon la revendication 10,
**caractérisée en ce que** le au moins un liant polymère et/ou oligomère est un polymère acrylique ayant un poids moléculaire de 10 000 à 50 000 g/mole.

13. Dispersion aqueuse de liant selon l'une quelconque des revendications précédentes,
**caractérisée en ce que** les nanoparticules inorganiques présentent un diamètre de 1 à 450 nm.

14. Dispersion aqueuse de liant selon l'une quelconque des revendications précédentes,
**caractérisée en ce que** les nanoparticules se présentent sous forme agglomérée et/ou désagglomérée.

15. Dispersion aqueuse de liant selon l'une quelconque des revendications précédentes,
**caractérisée en ce que** les nanoparticules présentent une distribution de tailles particulaires monomodale et/ou multimodale.

16. Dispersion aqueuse de liant selon l'une quelconque des revendications précédentes,
**caractérisée en ce que** les nanoparticules sont choisies dans le groupe des oxydes et/ou des oxydes mixtes, des carbures, des borures et des nitrures d'éléments du deuxième au quatrième groupe et/ou d'éléments du premier au huitième sous-groupe du système périodique, y compris les lanthanides.

17. Dispersion aqueuse de liant selon la revendication 16,
**caractérisée en ce que** les nanoparticules sont choisies dans le groupe constitué du dioxyde de silicium, de l'oxyde d'aluminium, de l'oxyde de cérium, de l'oxyde de zirconium et du dioxyde de titane.

18. Dispersion aqueuse de liant selon l'une quelconque des revendications précédentes,
**caractérisée en ce que** les nanoparticules sont fonctionnalisées sur leur surface par des composés organiques.

19. Dispersion aqueuse de liant selon la revendication 18,
**caractérisée en ce que** les composés organiques sont liés à la surface des particules par voie chimique ou par le biais d'une interaction d'adsorption.

20. Dispersion aqueuse de liant selon l'une quelconque des revendications précédentes,
**caractérisée en ce qu'**elle contient des particules polymères contenant de 5 bis à 65 % en volume de nanoparticules inorganiques par rapport à la composition totale.

21. Dispersion aqueuse de liant selon la revendication 20,
**caractérisée en ce que** 0,5 à 30 % en volume de nanoparticules inorganiques sont contenus dans les particules polymères.

22. Dispersion aqueuse de liant selon l'une quelconque des revendications précédentes,
**caractérisée en ce que,** en supplément, 0,5 à 20 % en volume de nanoparticules inorganiques sont contenus dans la phase aqueuse de la dispersion polymère par rapport à composition totale.

23. Dispersion aqueuse de liant selon la revendication 19,
**caractérisée en ce que** jusqu'à 100 % en volume des nanoparticules supplémentaires sont remplacés par des microparticules ayant une taille particulaire moyenne de 450 nm à 200 µm.

24. Dispersion aqueuse de liant selon l'une quelconque des revendications précédentes,
**caractérisée en ce qu'**elle comprend, comme auxiliaires et additifs, des colloïdes protecteurs et/ou des émulsifiants, des tensioactifs, des amphiphiles et, pour la formation d'une émulsion de polymères ou d'oligomères ioniques, des acides ou des bases comme contre-ions.

25. Dispersion aqueuse de liant selon l'une quelconque des revendications précédentes,
**caractérisée en ce qu'**elle contient 0,1 à 10 % en volume du colloïde protecteur et/ou de l'émulsifiant par rapport à la composition totale.

26. Dispersion aqueuse de liant selon l'une quelconque des revendications précédentes,
**caractérisée en ce qu'**elle comprend, comme auxiliaires et additifs, des catalyseurs, des co-catalyseurs, des formateurs de radicaux, des photoinitiateurs, des photosensibilisateurs, des agents d'hydrophobisation, des agents de matage, des lubrifiants, des anti-mousse, des agents désaérants, des agents mouillants, des produits d'écoulement, des agents thixotropes, des épaississants, des pigments inorganiques et organiques, des charges, des agents adhésifs, des inhibiteurs de corrosion, des stabilisateurs aux UV, des composés de type HALS, des piégeurs de radicaux et/ou des agents antistatiques.

27. Dispersion aqueuse de liant selon l'une quelconque des revendications précédentes,
**caractérisée en ce qu'**elle comprend, comme auxiliaires/additifs, des monomères polymérisables.

28. Dispersion aqueuse de liant selon la revendication 27,
**caractérisée en ce que** l'on utilise, comme auxiliaires/additifs, des esters de l'acide méthacrylique présentant des radicaux alkyle en C₁-C₁₆ ramifiés et/ou linéaires.

29. Procédé pour la fabrication d'une dispersion aqueuse de liant selon l'une quelconque des revendications 1 à 28, dans lequel les nanoparticules inorganiques sont dispersées par cisaillement dans une phase polymère incorporée sans eau et les particules polymères contenant les nanoparticules sont obtenues en émulsionnant la phase polymère exempte d'eau et contenant les nanoparticules par cisaillement dans de l'eau et, éventuellement, en ajoutant un colloïde protecteur et/ou un émulsifiant ou d'autres auxiliaires et additifs.

30. Procédé de fabrication d'une dispersion aqueuse polymère selon l'une quelconque des revendications 1 à 28,
**caractérisé en ce que** les nanoparticules sont ajoutées comme éduits lors de la fabrication du polymère et les particules polymères contenant les nanoparticules sont obtenues en émulsionnant le polymère contenant les nanoparticules par cisaillement dans de l'eau et, éventuellement, en ajoutant un colloïde protecteur et/ou un émulsifiant ou d'autres auxiliaires et additifs.

31. Procédé selon l'une quelconque des revendications 26 ou 27,
**caractérisé en ce que** le liant est un polyuréthanne.

32. Procédé selon la revendication 29, 30 ou 31,
**caractérisé en ce** l'on ajoute, lors de la fabrication, des composés réactifs.

33. Procédé selon la revendication 32,
**caractérisé en ce que** les composés réactifs sont des aminoalcools présentant des groupements amino primaires et/ou secondaires.

34. Procédé selon la revendication 33,
**caractérisé en ce que** les composés réactifs sont choisis dans le groupe constitué des acides aminocarboxyliques, des acides polyaminocarboxyliques, des gélatines et/ou des aminosilanes.

35. Procédé selon au moins l'une quelconque des revendications 29 à 34,
**caractérisé en ce que** la fabrication des particules polymères se fait par polymérisation en émulsion.

36. Utilisation de la dispersion aqueuse de liant selon l'une quelconque des revendications 1 à 28 dans des préparations de revêtement ou de collage.

37. Utilisation de la dispersion aqueuse de liant selon la revendication 36 pour la fabrication de couches résistant au rayage, à l'abrasion et à l'adhérence, de couches ayant une capacité élevée de sollicitation chimique ou mécanique et/ou une stabilité accrue à la lumière UV et/ou aux conditions atmosphériques et/ou de couches barrières.
